# FASCICULE DE BREVET EUROPEEN

(11) **EP 3 532 411 B1**
(45) Date de publication et mention de la délivrance du brevet: **11.11.2020**
(21) Numéro de dépôt: 17788253.7
(22) Date de dépôt: 26.10.2017
(51) Int. Cl.: B65G 41/00

(54) **CONVOYEUR A BANDE ET PROCEDE DE DEPLACEMENT**
FÖRDERBAND UND BEWEGUNGSVERFAHREN
BELT CONVEYOR AND MOVING METHOD

(30) Priorité: 26.10.2016 FR 1660383
(43) Date de publication de la demande: 04.09.2019
(73) Titulaire: Brunone, René, 27950 Saint Marcel (FR)
(72) Inventeur: Brunone, René, 27950 Saint Marcel (FR)
(74) Mandataire: Lavoix
(86) Numéro de dépôt international: PCT/EP2017/077508
(87) Numéro de publication internationale: WO 2018/078047

(56) Documents cités:
- DE-A1- 3 242 769
- JP-A- S60 242 115
- JP-B2- 3 914 316
- US-B1- 6 336 545

## Description

La présente invention concerne en général les convoyeurs à bande, notamment les convoyeurs utilisés pour le transport de matériaux tels que par exemple du minerai, du stérile minier ou tout autre matériau qui peut être extrait d'une mine ou d'une carrière. De tels convoyeurs sont par exemple utilisés pour transporter de tels matériaux entre la zone d'extraction et une zone de stockage ou une zone de chargement dans des véhicules.

Plus précisément, l'invention concerne selon un premier aspect, un convoyeur à bande selon le préambule de la revendication 1.

EP1350742 décrit un convoyeur à bande du type précité rippable. On entend par le terme « convoyeur rippable », un convoyeur déplaçable par glissement sur le sol. Le déplacement s'effectue alors généralement transversalement à la direction de convoyage. Pour ce faire, un lien filiforme est fixé, selon la direction de convoyage, sur les châssis de support de la bande du convoyeur. Le lien est ensuite successivement sollicité transversalement suivant toute sa longueur par un engin motorisé circulant selon la direction longitudinale du convoyeur pour provoquer le déplacement progressif des châssis de support.

Ce type de convoyeur rippable n'est cependant pas facilement déplaçable. En effet, le déplacement transversal à la bande de convoyage s'effectue par déplacement successifs des châssis. La mise en oeuvre sur un terrain qui présente des variations topographiques ou des variations de la nature du sol (e.g. propriétés géologiques ou pédologiques) peut s'avérer délicate. De plus, la présence d'obstacles naturels (e.g. lacs, rivières) ou anthropiques (e.g. routes, bâtiments) complique d'autant plus la mise en oeuvre de ce type de convoyeur.

JP 3 914316 B2 décrit également un convoyeur à bande selon le préambule de la revendication 1.

Un des objectifs de l'invention est de proposer un convoyeur à bande dont le déplacement sur le terrain soit facilité.

A cet effet, l'invention porte sur un convoyeur à bande selon la revendication 1.

Ainsi, les dispositifs de déplacement fixés sur certaines stations de support de la bande facilitent le déplacement du convoyeur sur le terrain en apportant une flexibilité et une rapidité de mise en oeuvre sur un site tel qu'une mine ou une carrière.

Le convoyeur selon l'invention peut comprendre une ou plusieurs des caractéristiques des revendications 2 à 11, considérées individuellement ou selon toutes les combinaisons techniquement possibles.

Selon un second aspect, l'invention porte sur un procédé de déplacement d'un convoyeur à bande selon la revendication 12.

Le procédé de déplacement peut également présenter les caractéristiques de la revendication 13.

D'autres caractéristiques et avantages de l'invention ressortiront de la description détaillée qui est en donnée ci-dessous, à titre indicatif et nullement limitatif, en référence aux figures annexées, parmi lesquelles :
la figure 1 présente une vue de côté d'une portion du convoyeur à bande selon l'invention ;
la figure 2 présente une vue isométrique du convoyeur à bande au niveau d'une station de support ;
les figure 3 et 4 montrent plus précisément une vue isométrique et une vue du dessus du détail d'une station de support ;
la figure 5 présente le détail d'un bras secondaire d'une station de support selon la direction longitudinale de la bande.

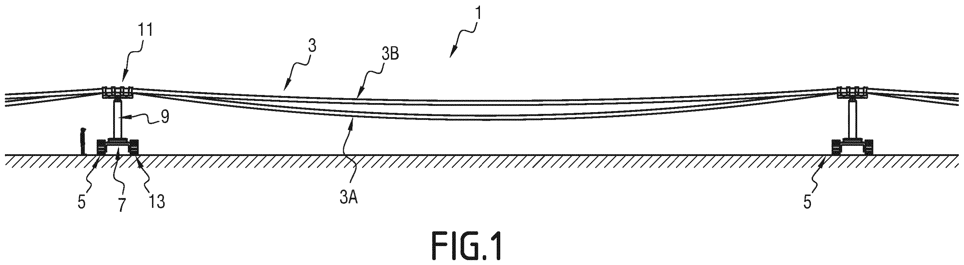

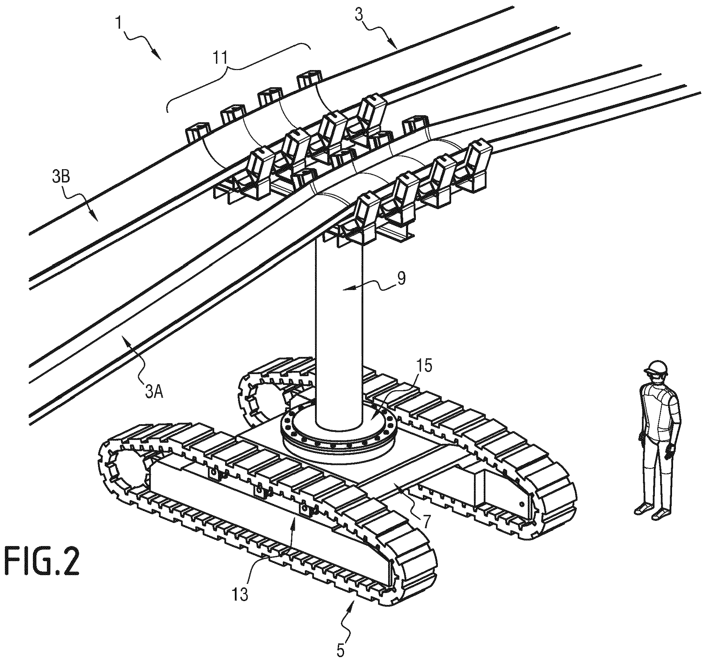

Les figures 1 et 2 présentent un convoyeur à bande 1 qui comporte une bande transporteuse longitudinale autoportante 3 destinée à transporter des matériaux divisés tels que du minerai, du stérile minier, des gravats ou tout autre type de matériaux. Le convoyeur comporte une pluralité de stations de support 5 réparties le long de la bande transporteuse.

On entend par « bande autoportante », une bande transporteuse qui conserve sa forme en demi-cylindre au repos, en l'absence de contrainte extérieure visant à la mettre en forme.

Par exemple, ce type de bande comprend une matrice en un matériau élastique et une armature noyée dans la matrice. La matrice est typiquement constituée de caoutchouc synthétique ou naturel ou de PVC.

L'armature comprend par exemple des câbles métalliques longitudinaux ou une trame textile en aramide ou tout autre textile ayant un allongement compris entre 0.2% et 2%. Ces câbles sont typiquement réalisés en acier et présentent un allongement sous charge très faible, valant par exemple 0.2% à 0.3%. Ces câbles s'étendent sur toute la longueur de la bande. Ils sont typiquement régulièrement répartis circonférentiellement dans la section de la bande ou sur une portion circonférentielle. L'armature comprend également, par exemple, en plus des câbles longitudinaux ou du textile équivalent, des câbles métalliques transversaux ou une trame textile en aramide ou tout autre textile. Ces câbles sont typiquement réalisés en acier. Ils s'étendent typiquement sur la plus grande partie du périmètre de la bande. Les câbles longitudinaux et transversaux sont par exemple entrelacés les uns avec les autres selon une trame prédéterminée.

La bande transporteuse autoportante est fabriquée par tronçons selon un procédé de vulcanisation. Pendant cette opération, chaque tronçon est mis en forme autour d'un noyau de forme adapté, puis cuit tout en restant plaqué contre le noyau. La fabrication est réalisée en continu, chaque nouveau tronçon étant moulé et cuit de manière à constituer un prolongement de la portion de bande déjà prête. La cuisson est réalisée avec l'armature noyée dans la matrice. L'armature est placée dans la matrice avant ou pendant l'opération de mise en forme.

Par exemple, les demandes de brevet français déposées par la demanderesse sous les numéros 15 59277 et 15 59301 décrivent respectivement une telle bande autoportante et son procédé de fabrication.

La forme en demi-cylindre de la bande 3 lui confère des avantages comparée à une bande classique. Elle possède une capacité de chargement supérieure. Sa tenue mécanique est augmentée et sa rigidité est accrue grâce à l'effet de poutre.

La bande peut ainsi franchir de grandes distances (i.e. plusieurs kilomètres par exemple) en minimisant le nombre de stations de support de la bande.

Avantageusement, la bande transporteuse autoportante peut être ouverte sur sa partie supérieure ou fermée pour empêcher par exemple la chute des matériaux transportés.

La bande transporteuse autoportante est typiquement refermée en boucle à ses extrémités grâce à des rouleaux de retournement qui ne sont pas représentés sur les figures.

La bande transporteuse comporte ainsi un premier brin de transport des matériaux 3A et un brin de retour 3B, parallèles l'un à l'autre et s'étendant dans la direction longitudinal du convoyeur 1.

Ainsi, la bande relie par exemple une station de chargement de matériau située à proximité d'une carrière et une station de déchargement de matériau située à proximité d'une usine de traitement ou de conditionnement du matériau, et d'infrastructures de transport.

Chaque station de support 5 comporte une embase 7 sur laquelle est fixé un pylône 9. Des dispositifs de support 11 de la bande sont fixés sur le pylône 9. Les dispositifs de support 11 de la bande sont fixés sur le pylône 9 à une hauteur par rapport au sol supérieure à un mètre, de préférence supérieure à 2 mètres, encore de préférence supérieure à 5 mètres.

La hauteur maximale des dispositifs de support 11 est guidée par des contraintes réglementaires, météorologiques, architecturales et/ou économiques. La hauteur maximale est par exemple de 50 mètres.

Typiquement, deux stations de supports 5 consécutives le long de la bande transporteuse sont séparées par une distance au sol comprise entre 10 et 1000 mètres, de préférence comprises entre 30 et 300 mètres, et valant typiquement 50 mètres.

L'écartement entre deux stations de support 5 consécutives et la hauteur des dispositifs de support sont déterminés plus précisément en fonction de la nature du sol et de la topographie du terrain, des obstacles à franchir, du diamètre de la bande, de la masse de la bande et de la masse volumique des matériaux transportés. Les obstacles à franchir peuvent être naturels (e.g. collines, forêts, plans d'eau) ou artificiels (e.g. bâtiments, routes).

Par ailleurs, la hauteur des dispositifs de support 11 dépend de la distance qui sépare deux stations de support 5 voisines. En effet, plus la distance entre deux stations de support 5 consécutives est grande, plus les dispositifs de support 11 de la bande sont fixés à une hauteur importante par rapport au sol, car la bande se creuse de manière plus prononcée entre les deux stations de support 5.

Inversement, pour des raisons réglementaires, sécuritaires (i.e. chute de matériaux avec le vent) ou esthétiques (i.e. intégration dans le paysage) ou économique (i.e. coût des matériaux), la hauteur des dispositifs de support 11 peut être limitée. Dans ce cas, l'écartement entre les stations de support 5 voisines est choisi pour maintenir les dispositifs de support en dessous d'une hauteur maximale autorisée.

Avantageusement, au moins certaines stations de support 5 comprennent des dispositifs de déplacement 13 desdites stations.

L'embase 7 est typiquement un châssis mécano-soudé qui repose sur le sol par l'intermédiaire des dispositifs de déplacement 13 servant de moyens de propulsion. Ces dispositifs de déplacement 13 sont par exemple des roues ou de chenilles montées sur l'embase 7 de la station de support 5 comme illustré sur les figures 1 à 4.

Avantageusement, l'embase 7 comprend un moteur (non représenté), solidaire de l'embase, pour mettre en mouvement les roues ou les chenilles.

Un dispositif de commande (non représenté) permet par exemple de contrôler les déplacements de la station de support 5 manuellement, par exemple au moyen d'une cabine de pilotage fixée sur l'embase 7. En variante, le contrôle des déplacements de la station de support 5 se fait à distance par exemple par transmission d'ordres de commande par ondes hertziennes, onde wifi ou tout autre dispositif sans fil ou par un boitier de commande raccordé filairement à la station.

Avantageusement, les chenilles permettent de déplacer plus facilement les stations de support sur un terrain accidenté, c'est-à-dire un terrain présentant une topographie plus ou moins importante. Elles permettent également de faciliter le déplacement sur des terrains très meubles comme par exemple les terrains sableux.

Le pylône 9 est par exemple un pylône formé par un tube en acier.

Avantageusement, le pylône 9 de la station de support 5 de la bande est fixé sur l'embase 7 par une liaison pivotante 15 autour d'un axe s'étendant selon une direction perpendiculaire au sol.

Par exemple, cette liaison pivotante 15 peut être assurée par un dispositif similaire à une tourelle d'engin de chantier.

Ceci permet d'orienter les dispositifs de support 11 de la bande selon une direction préférée, notamment après le déplacement de la station de support 5 sur le terrain et ceci en fonction des contraintes topographiques.

Alternativement, le pylône 9 de la station de support 5 de la bande est fixé sur l'embase 7 par une liaison rotule. Le pylône 9 comprend par exemple une extrémité inférieure sphérique qui coopère avec un élément formant une cage fixé sur l'embase 7 de la station de support 5.

Cette liaison rotule permet au pylône 9 de pouvoir s'incliner par rapport à la direction perpendiculaire à l'embase 7.

L'angle formé alors entre la direction du pylône 9 et la direction perpendiculaire à l'embase 7 est compris typiquement entre 0° et 30°. L'angle maximal d'inclinaison doit être choisi en fonction de la longueur du pylône afin de ne pas engendrer une instabilité de la station de support.

La liaison rotule permet par exemple d'installer la station de support de bande sur un terrain présentant une certaine déclivité et de maintenir les dispositifs de support 11 selon un plan souhaité. Par exemple, l'inclinaison du pylône 9 peut être fonction de la position des dispositifs de support 11 des stations de support 5 adjacentes.

Selon une autre variante, le pylône 9 de la station de support 5 de la bande est fixé sur la base par une liaison de type rotule et pivotante selon les caractéristiques décrites précédemment.

Avantageusement, le pylône 9 est télescopique, ce qui permet d'augmenter ou de diminuer la hauteur des dispositifs de support de la bande par rapport au sol.

Ainsi, la hauteur des dispositifs de support par rapport au sol peut être adaptée en fonction des contraintes extérieures décrites précédemment tels que les obstacles naturels ou anthropiques.

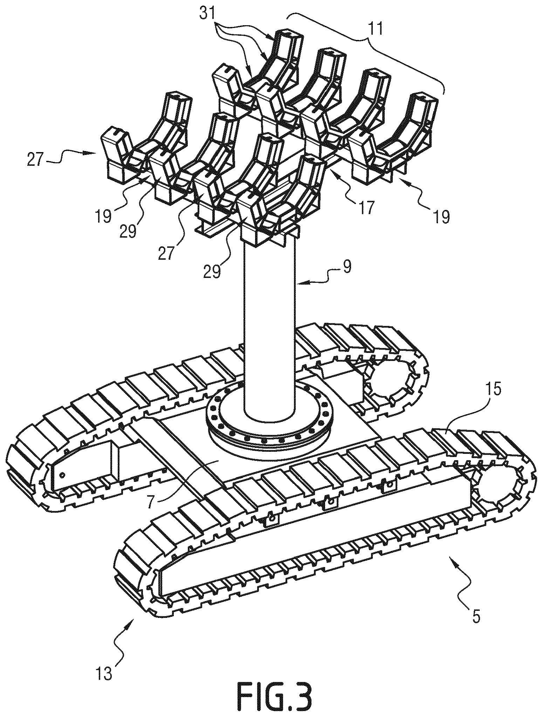

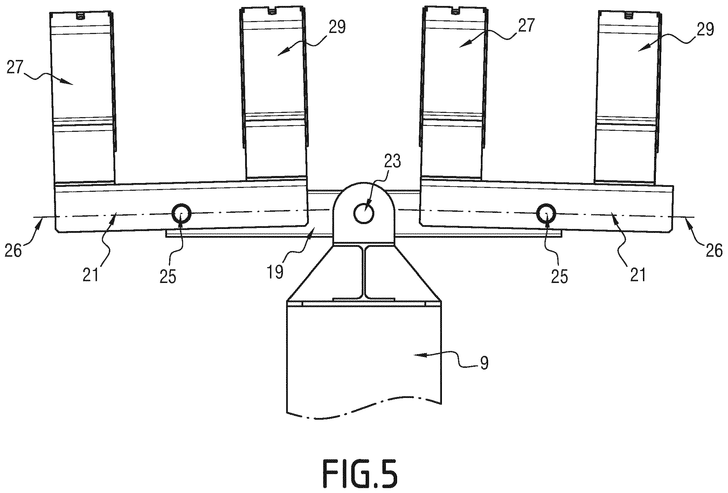

Comme visible sur les figures 2 et 3, les dispositifs de support 11 comprennent de préférence chacun un bras principal 17 s'étendant selon une direction dite principale, au moins un bras secondaire 19 fixé au bras principal et s'étendant suivant une direction secondaire sensiblement perpendiculaire à la direction principale. Le ou chaque bras secondaire comprend au moins un organe de support 21 de la bande fixé sur celui-ci (figure 5).

Le bras principal 17 est typiquement fixé sur le pylône 9 de la station de support 5 de manière solidaire sans degré de liberté. Le bras principal 17 s'étend selon une direction perpendiculaire à la direction du pylône 9.

Le bras principal 17 est par exemple une poutrelle en acier de section carrée ou rectangulaire.

Comme on peut le voir sur la figure 5, le ou chaque bras secondaire 19 est typiquement fixé sur le bras principal 17 au moyen d'une liaison pivotante 23 autour d'un axe s'étendant selon la direction principale.

Le mouvement autour de la liaison pivotante 23 décrite ci-dessus est libre. Ainsi, le ou chaque bras secondaire 19 peut osciller librement autour de son axe.

Le ou chaque bras secondaire 19 est par exemple une poutrelle en acier ou une pièce en acier en forme de U renversé.

Selon l'invention, on peut le voir sur la figure 5, le ou chaque organe de support 21 de la bande est fixé sur le bras secondaire 19 au moyen d'une première liaison pivotante 25 autour d'un axe parallèle à la direction principale.

Selon l'invention, le ou chaque organe de support 21 de la bande est fixé au bras secondaire 19 au moyen d'une seconde liaison pivotante 26 autour d'un axe perpendiculaire à l'axe de rotation de la première liaison pivotante 25.

Avantageusement, comme visible sur la figure 3, chaque station de support 5 de la bande comporte deux bras secondaires 19, parallèles entre eux, fixés à chaque extrémité du bras principal 17.

Chaque bras secondaire 19 comporte avantageusement au moins deux organes de support 21 disposés le long du bras secondaire 19, de part et d'autre de la liaison pivotante 23.

De même que pour la liaison pivotante 23 décrite précédemment, le mouvement de chaque organe de support 21 est libre autour de sa première liaison pivotante 25 et de sa seconde liaison pivotante 26 correspondantes.

Ainsi, les mouvements autour des liaisons pivotantes 23, 25 et 26 ne sont imposés par aucune contrainte extérieure autre que celles de la bande transporteuse. Les oscillations du ou de chaque bras secondaire 19 et des organes de support 21 dépendent par exemple de la masse de matériau présent sur la bande ou de la hauteur des dispositifs de support 11 de la bande de la station de support par rapport à la hauteur des dispositifs de support des stations précédentes ou des stations suivantes.

Chaque organe de support 21 est composé de deux éléments de supports 27 et 29 parallèles entre eux sensiblement perpendiculaires sensiblement à la direction secondaire.

L'écartement entre chaque élément de support 27 et 29 d'un organe de support 21 est fixe.

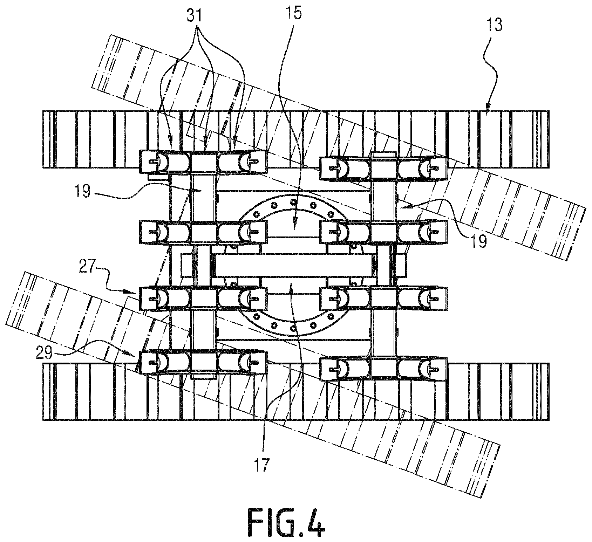

Chaque élément de support 27 et 29 comporte des rouleaux 31 visibles sur les figures 3 et 4. Chaque élément 27 et 29 forme un berceau de support et de guidage en forme d'auge d'un tronçon longitudinal de la bande. Chaque élément de support 27 et 29 comporte au moins quatre rouleaux 31, de préférence cinq rouleaux 31. Ces rouleaux 31 sont répartis circonférentiellement le long de la moitié inférieure du périmètre de la bande.

En variante, les rouleaux 31 sont remplacés par des patins qui présentent une surface sur laquelle glisse la bande transporteuse.

Certaines stations de support 5 peuvent comporter des dispositifs d'entrainement de la bande. Ces dispositifs d'entrainement, qui ne sont pas représentés sur les figures, comprennent par exemple des ensembles de moto réducteurs fixés sur l'embase 7, sur le pylône 9 ou au niveau de chaque élément de support 27 et 29.

Ces moto réducteurs entraînent les rouleaux 31 en rotation et permettent d'entraîner la bande 3A et 3B.

Avantageusement, les moto réducteurs sont aptes à entraîner les rouleaux 31 dans un sens de rotation ou dans un autre en fonction du sens de déplacement de la bande transporteuse.

Alternativement, le convoyeur peut être équipé de rouleaux à moteurs, c'est-à-dire que chaque rouleau 31 intègre à l'intérieur de sa structure un moto réducteur entrainant le rouleau 31 en rotation.

Ainsi, toutes les stations de support 5 ne comportent pas de façon systématique des dispositifs d'entrainement de la bande. Les stations de support 5 qui comprennent les dispositifs d'entrainement 13 sont choisies par exemple en fonction du profil topographique suivi par le convoyeur et du chargement de la bande et ceci afin de faciliter le déplacement de la bande.

Au moins une partie du convoyeur à bande 1 peut être déplacée sur le terrain en déplaçant, de manière successive ou concomitante, une pluralité de stations de supports 5 par exemple selon une direction transversale à la direction longitudinale de la bande.

Ce déplacement peut s'effectuer manuellement par l'intervention d'un opérateur ou de manière automatisée selon une séquence de déplacement programmée par ordinateur.

Dans ce cas, la trajectoire des stations de support 5 est par exemple optimisée en fonction des contraintes extérieures comme par exemple la topographie du site ou les obstacles naturels ou artificiels.

Les stations de support 5 de la bande transporteuse peuvent être déplacées facilement grâce aux dispositifs de déplacement 13 fixés sur chaque station de support 5 quelles que soient la topographie du site et la nature du sol.

Les stations de support 5 peuvent ainsi être déplacées sur des terrains meubles ou présentant une surface irrégulière, par exemple caillouteuse. Avantageusement, les stations de support 5 peuvent être déplacées de manière à éviter ou contourner certains obstacles naturels ou d'origine anthropique.

L'utilisation de stations de support qui comprennent des pylônes télescopiques et/ou inclinables par rapport au plan de l'embase 7 des stations, tels que décrit précédemment, rend l'invention particulièrement flexible et modulable. L'implantation du convoyeur sur le terrain s'en trouve facilité.

Les dispositifs de support de la bande tels que décrits apportent également une flexibilité au niveau de l'utilisation du convoyeur selon l'invention.

En effet, chacun des bras secondaire 19 et chacun des organes de support 21 accompagnent le mouvement de la bande. Ces dispositions facilitent par exemple le déplacement de la bande.

L'invention présente par exemple un intérêt particulier sur un site d'extraction à ciel ouvert de grande ampleur. En effet, dans ce genre d'installation, les convoyeurs doivent suivre l'évolution et l'avancement du point d'extraction.

Ainsi, en fonctionnement, un engin d'extraction, comme par exemple une excavatrice à roue dentée, se déplace au fur à mesure qu'il creuse le sol. C'est pourquoi, il est nécessaire que le système d'acheminement des matériaux extraits du sol vers l'installation de traitement soit mobile et se déplace en même temps que l'engin d'extraction.

Le convoyeur selon un mode de réalisation de l'invention permet également d'optimiser le transport sur un site extraction. Selon la revendication 8, chaque station de support 5 comporte deux bras secondaires 19 dont les organes de supports 21 supportent chacun un brin de la bande transporteuse. Ces deux brins circulent en parallèle, le premier brin 3AA circulant dans un sens et le second brin 3B circulant dans le sens opposé.

En effet, sur un site d'extraction de phosphate, la quantité de matière non exploitable (i.e. stérile) est proche de 60% de la quantité extraite. L'intérêt du convoyeur à double sens selon la revendication 8 est que l'on peut renvoyer directement les produits non exploitables au niveau du point d'extraction et combler en partie le laissé par l'excavation au fur à mesure du déplacement de l'excavatrice.

## Revendications

1. Convoyeur à bande (1) comprenant une bande transporteuse longitudinale (3), une pluralité de stations de support (5) de la bande comprenant chacune une embase (7), un pylône (9) fixé sur l'embase (7) et des dispositifs de support (11) de la bande fixés sur le pylône (9), au moins certaines stations de support (5) comprenant des dispositifs de déplacement (13) desdites stations, les dispositifs de support (11) de la bande étant fixés sur le pylône (9) à une hauteur par rapport au sol supérieure à un mètre, **caractérisé en ce que** la bande transporteuse est autoportante et **en ce que** les dispositifs de support (11) comprennent un bras principal (17) s'étendant selon une direction principale, au moins un bras secondaire (19) fixé au bras principal (17) et s'étendant suivant une direction secondaire sensiblement perpendiculaire à la direction principale et d'au moins un organe de support (21) de la bande fixé sur le bras secondaire (19), le ou chaque organe de support (21) de la bande étant fixé au bras secondaire (19) au moyen d'une première liaison pivotante (25) autour d'un axe parallèle à la direction principale et au moyen d'une seconde liaison pivotante (26) autour d'un axe perpendiculaire à l'axe de rotation de la première liaison pivotante (25).

2. Convoyeur à bande (1) selon la revendication 1, **caractérisé en ce que** les dispositifs de déplacement (13) des stations de support comprennent des chenilles ou des roues montées sur l'embase (7).

3. Convoyeur à bande (1) selon l'une quelconque des revendications précédentes, **caractérisé en ce que** chaque station de support (5) comprend une liaison rotule du pylône (9) à l'embase (7) et/ou une liaison pivotante (15) du pylône (9) à l'embase (7), autour d'un axe s'étendant selon une direction perpendiculaire au sol.

4. Convoyeur à bande (1) selon l'une quelconque des revendications précédentes, **caractérisé en ce que** le pylône (9) est télescopique.

5. Convoyeur à bande (1) selon l'une quelconque des revendication 1 à 4, **caractérisé en ce que** le ou chaque bras secondaire (19) est fixé sur le bras principal (17) au moyen d'une liaison pivotante (23) autour d'un axe s'étendant selon la direction principale.

6. Convoyeur à bande (1) selon l'une quelconque des revendications 1 à 5, caractérisé en qu'il comprend deux bras secondaires (19) parallèles entre eux fixés à chaque extrémité du bras principal (17), portant chacun au moins un organe de support (21).

7. Convoyeur à bande (1) selon l'une quelconque des revendications 1 à 6, **caractérisé en ce que** le ou chaque bras secondaire (19) comprend deux organes de support (21) disposés le long du bras secondaire (19).

8. Convoyeur à bande (1) selon l'une quelconque des revendications 1 à 7, **caractérisé en ce que** la bande transporteuse (3) est refermée en boucle, le brin aller (3A) de la bande reposant sur le ou chaque organe de support (21) porté par l'un des bras secondaires (19) et le brin retour (3B) de la bande reposant sur le ou chaque organe de support (21) de l'autre des bras secondaires (19).

9. Convoyeur à bande (1) selon l'une quelconque des revendications 1 à 8, **caractérisé en ce que** le ou chaque organe de support (21) comprend au moins deux éléments de support (27 et 29) parallèles entre eux.

10. Convoyeur à bande (1) selon la revendication précédente, **caractérisé en ce que** chaque élément de support (27 et 29) comporte une pluralité de rouleaux (31) définissant un berceau de support de la bande.

11. Convoyeur à bande (1) selon la revendication précédente, **caractérisé en ce que** certains rouleaux (31) sont motorisés.

12. Procédé de déplacement d'un convoyeur à bande (1) selon l'une quelconque des revendications précédentes, **caractérisé en ce que** le procédé comporte une étape pendant laquelle une pluralité de stations de support (5) de la bande est déplacée.

13. Procédé de déplacement d'un convoyeur à bande (1) selon la revendication précédente, **caractérisé en ce que** le déplacement desdites stations de support (5) s'effectue manuellement par un opérateur ou de manière automatisée selon une séquence programmée par ordinateur.

## Patentansprüche

1. Bandförderer (1) mit einem longitudinalen Transportband (3), einer Mehrzahl von Band-Haltestationen (5), die jeweils einen Sockel (7), einen Mast (9), der an dem Sockel (7) befestigt ist, und Band-Haltevorrichtungen (11) aufweisen, die an dem Mast (9) befestigt sind, wobei wenigstens einige Haltestationen (5) Vorrichtungen zur Verlagerung (13) der besagten Stationen aufweisen, wobei die Band-Haltevorrichtungen (11) an dem Mast (9) in einer Höhe bezüglich des Bodens befestigt sind, die größer als ein Meter ist, **dadurch gekennzeichnet, dass** das Transportband selbstragend ist und dass die Haltevorrichtungen (11) aufweisen einen Hauptarm (17), der sich entlang einer Hauptrichtung erstreckt, wenigstens einen Sekundärarm (19), der am Hauptarm (17) befestigt ist und sich entlang einer Sekundärrichtung erstreckt, die im Wesentlichen senkrecht zur Hauptrichtung ist, und wenigstens ein Band-Halteorgan (21), das am Sekundärarm (19) befestigt ist, wobei das oder jedes Band-Halteorgan (21) am Sekundärarm (19) befestigt ist mittels einer ersten Schwenkverbindung (25) um eine Achse parallel zu der Hauptrichtung und mittels einer zweiten Schwenkverbindung (26) um eine Achse senkrecht zu der Rotationsachse der ersten Schwenkverbindung (25).

2. Bandförderer (1) gemäß Anspruch 1, **dadurch gekennzeichnet, dass** die Vorrichtungen zur Verlagerung (13) der Haltestationen Laufketten oder Räder aufweisen, die am Sockel (7) montiert sind.

3. Bandförderer (1) gemäß irgendeinem der vorigen Ansprüche, **dadurch gekennzeichnet, dass** jede Haltestation (5) eine Kugelgelenkverbindung des Masts (9) mit dem Sockel (7) und/oder eine Schwenkverbindung (15) des Masts (9) mit dem Sockel (7) aufweist um eine Achse, die sich entlang einer Richtung senkrecht zum Boden erstreckt.

4. Bandförderer (1) gemäß irgendeinem der vorigen Ansprüche, **dadurch gekennzeichnet, dass** der Mast (9) teleskopisch ist.

5. Bandförderer (1) gemäß irgendeinem der Ansprüche 1 bis 4, **dadurch gekennzeichnet, dass** der oder jeder Sekundärarm (19) am Hauptarm (17) befestigt ist mittels einer Schwenkverbindung (23) um eine Achse, die sich entlang der Hauptrichtung erstreckt.

6. Bandförderer (1) gemäß irgendeinem der Ansprüche 1 bis 5, **dadurch gekennzeichnet, dass** er aufweist zwei Sekundärarme (19), die zueinander parallel sind und an jedem Ende des Hauptarms (17) befestigt sind und die jeweils wenigstens ein Halteorgan (21) tragen.

7. Bandförderer (1) gemäß irgendeinem der Ansprüche 1 bis 6, **dadurch gekennzeichnet, dass** der oder jeder Sekundärarm (19) zwei Halteorgane (21) aufweist, die entlang des Sekundärarms (19) angeordnet sind.

8. Bandförderer (1) gemäß irgendeinem der Ansprüche 1 bis 7, **dadurch gekennzeichnet, dass** das Transportband (3) eine geschlossene Schleife bildet, wobei der Hinführungsstrang (3A) des Bands auf dem oder jedem Halteorgan (21) aufliegt, das von einem der Sekundärarme (19) getragen ist, und der Rückführungsstrang (3B) des Bands auf dem oder jedem Halteorgan (21) des anderen der Sekundärarme (19) aufliegt.

9. Bandförderer (1) gemäß irgendeinem der Ansprüche 1 bis 8, **dadurch gekennzeichnet, dass** das oder jedes Halteorgan (21) wenigstens zwei Halteelemente (27 und 29) aufweist, die zueinander parallel sind.

10. Bandförderer (1) gemäß dem vorigen Anspruch, **dadurch gekennzeichnet, dass** jedes Halteelement (27 und 29) eine Mehrzahl von Rollen (31) aufweist, die einen Band-Haltebogen definieren.

11. Bandförderer (1) gemäß dem vorigen Anspruch, **dadurch gekennzeichnet, dass** einige Rollen (31) motorgetrieben sind.

12. Verfahren zum Verlagern eines Bandförderers (1) gemäß irgendeinem der vorigen Ansprüche, **dadurch gekennzeichnet, dass** das Verfahren aufweist einen Schritt, während dessen eine Mehrzahl von Haltestationen (5) des Bands verlagert wird.

13. Verfahren zum Verlagern eines Bandförderers (1) gemäß dem vorigen Anspruch, **dadurch gekennzeichnet, dass** das Verlagern der besagten Haltestationen (5) manuell von einem Bediener oder in automatisierter Weise gemäß einer programmierten Sequenz von einem Rechner betätigt wird.

## Claims

1. Belt conveyor (1) comprising a longitudinal conveyor belt (3), a plurality of belt support stations (5) wherein each support station (5) comprises a base (7), a tower (9) fixed on the base (7) and belt support devices (11) fixed on the tower (9), at least some support stations (5) comprising devices (13) to displace the stations, the support devices (11) of the belt being fixed on the tower (9) at a height above ground greater than one meter, **characterized in that** the conveyor belt (3) is self-supporting and **in that** the support devices (11) comprise a main arm (17) extending in a main direction, at least one secondary arm (19) fixed to the main arm (17) and extending in a secondary direction substantially perpendicular to the main direction, and at least one belt support member (21) fixed on the secondary arm (19), the, or each, belt support member (21) being attached to the secondary arm (19) by means of a first connection (25) pivoting about an axis parallel to the main direction and by means of a second connection (26) pivoting about an axis perpendicular to the axis of rotation of the first pivoting connection (25).

2. Belt conveyor (1) according to claim 1, **characterized in that** the displacement devices (13) of the support stations comprise tracks or wheels mounted on the base (7).

3. Belt conveyor (1) according to any one of the preceding claims, **characterized in that** each support station (5) comprises a ball joint connection of the tower (9) to the base (7) and/or a connection (15) between the tower (9) and the base (7) pivoting about an axis extending in a direction perpendicular to the ground.

4. Belt conveyor (1) according to any one of the preceding claims, **characterized in that** the tower (9) is telescopic.

5. Belt conveyor (1) according to any one of claims 1 to 4, **characterized in that** the, or each, secondary arm (19) is fixed on the main arm (17) by means of a connection (23) pivoting about an axis extending in the main direction.

6. Belt conveyor (1) according to any one of claims 1 to 8, **characterized in that** it comprises two secondary arms (19) parallel to each other and fixed to each end of the main arm (17), each secondary arm bearing at least one support member (21).

7. Belt conveyor (1) according to any one of claims 1 to 6, **characterized in that** the, or each, secondary arm (19) comprises two support members (21) arranged along the secondary arm (19).

8. Belt conveyor (1) according to any one of claims 1 to 7, **characterized in that** the conveyor belt (3) forms a closed loop, wherein the forwards run (3A) of the belt rests on the, or each, support member (21) borne by one of the secondary arms (19), while the return run (3B) of the belt rests on the, or each, support member (21) of the other of the secondary arms (19).

9. Belt conveyor (1) according to any one of claims 1 to 8, **characterized in that** the, or each, support member (21) comprises at least two support elements (27, 29) parallel to each other.

10. Belt conveyor (1) according to the preceding claim, **characterized in that** each support element (27, 29) comprises a plurality of rollers (31) defining a support cradle for the belt.

11. Belt conveyor (1) according to the preceding claim, **characterized in that** some rollers (31) are motorized.

12. Method of moving a belt conveyor (1) according to any one of the preceding claims, **characterized in that** the method comprises a step during which a plurality of belt support stations (5) is moved.

13. Method of moving a belt conveyor (1) according to the preceding claim, **characterized in that** the displacement of the support stations (5) is manually performed by an operator or in an automated manner in a computer programmed sequence.
